# FASCICULE DE BREVET EUROPEEN

(11) **EP 2 539 164 B1**
(45) Date de publication et mention de la délivrance du brevet: **03.08.2016**
(21) Numéro de dépôt: 11710330.9
(22) Date de dépôt: 24.02.2011
(51) Int. Cl.: B60G 11/08, B60G 11/10

(54) **VEHICLE WHEEL SUSPENSION WITH TRANSVERSE LEAF SPRING**
RADAUFHÄNGUNG FÜR EIN KRAFTFAHRZEUG MIT EINER QUERBLATTFEDER
SUSPENSION DE ROUE DE VÉHICULE À RESSORT À LAME TRANSVERSALE

(30) Priorité: 26.02.2010 FR 1000798
(43) Date de publication de la demande: 02.01.2013
(73) Titulaire: Hutchinson, 75008 Paris (FR)
(72) Inventeur: NICQ, Geoffroy, 77810 Thomery (FR); CIOLCZYK, Jean-Pierre, F-45200 Montargis (FR); GONZALEZ-BAYON, Cristina, 45200 Amilly (FR)
(74) Mandataire: Gevers & Orès
(86) Numéro de dépôt international: PCT/IB2011/050775
(87) Numéro de publication internationale: WO 2011/104682

(56) Documents cités:
- FR-A1- 2 720 337
- US-A- 5 826 896

## Description

La présente invention concerne une liaison au sol pour train de roues avant ou arrière d'un véhicule automobile de type à lame de ressort composite, et un procédé de fabrication de cette liaison au sol.

D'une manière connue, les liaisons au sol de véhicules automobiles peuvent incorporer sur leur train avant un système de type Mac Pherson réalisé avec un berceau métallique, une barre anti-roulis, un ressort et un triangle avant avec des articulations élastiques pour chaque roue. Cette solution présente l'inconvénient d'être lourde, de requérir de nombreux composants ainsi qu'un montage complexe. De plus, l'encombrement vertical d'un train avant de type Mac Pherson, qui résulte de l'utilisation d'amortisseurs et de ressorts verticaux hélicoïdaux, ne peut pas être réduit en jouant sur la longueur de ces ressorts pour des raisons de dimensionnement mécanique en dépit de la réduction possible de la longueur des amortisseurs. Cela est pénalisant pour la sécurité des piétons en cas de choc latéral et limite en outre l'utilisation du volume sous le capot dans le cas de véhicules électriques ou hybrides.

Pour ces raisons, on a cherché depuis quelques années à intégrer les fonctions d'un train avant Mac Pherson, à l'exception des amortisseurs, dans une lame de ressort en matériau composite, ce qui a permis de gagner de 10 à 14 kg environ pour un petit véhicule urbain et a permis par ailleurs de se dispenser d'utiliser des ressorts verticaux grâce à la souplesse de la lame tout en facilitant la réalisation d'un train avant compact de faible encombrement vertical. Une telle lame doit être pourvue d'articulations élastiques pour assurer la liaison avec le châssis du véhicule et pour doter le train avant des propriétés cinématiques requises par les constructeurs automobiles comme divulgué dans le document FR 2720337. Ces articulations élastiques (typiquement à base de caoutchouc) sont usuellement montées sur des interfaces collées sur la face supérieure de la lame, ce qui complexifie le procédé global de fabrication et en augmente le coût car il faut concevoir au préalable un moule de grandes dimensions qui intègre cette lame.

Un inconvénient de ces lames de ressort composites à articulations adhérées sur le train et pourvues ou non de supports, réside dans l'encombrement des articulations à axe vertical dont le centre de rotation est situé dans le plan de la fibre neutre de la lame ressort, lequel positionnement facilite les réglages cinématiques du train.

Il est également connu de pourvoir les lames de ressort composites de supports portant les articulations à relier au châssis, par l'intermédiaire de couches interfaciales élastomères disposées entre ces supports et la lame pour éviter tout phénomène d'abrasion et répartir les efforts de manière uniforme, avec néanmoins comme inconvénient résultant de cette structure une instabilité du véhicule notamment lors d'un choc sur une seule roue, dans l'axe du véhicule par exemple ; en effet, le recul de cette roue peut entraîner la lame en rotation et donc faire tourner la roue opposée, entraînant l'ensemble du véhicule en rotation.

Lorsque l'articulation ou son support est collé par une interface en caoutchouc sur la face supérieure de la lame composite, la dégradation de ladite interface peut entraîner la perte de la liaison entre le train roulant et la caisse du véhicule, ce qui est incompatible avec les exigences de sécurité propres aux véhicules automobiles.

Un but de la présente invention est de proposer une liaison au sol pour train de roues avant ou arrière d'un véhicule automobile qui permette de remédier aux inconvénients précités, cette liaison au sol comprenant :
- une lame de ressort composite qui est destinée à être montée par ses deux extrémités sur ce train et qui présente deux faces supérieure et inférieure définissant ensemble deux bords longitudinaux reliés entre eux par lesdites extrémités, et
- deux structures porteuses du châssis du véhicule qui sont respectivement montées sur la lame à proximité desdites deux extrémités et qui comportent chacune deux articulations élastiques destinées à être reliées au châssis et respectivement agencées à proximité desdits bords longitudinaux.

A cet effet, une liaison au sol selon l'invention est telle que chaque structure porteuse enserre transversalement la lame en étant appliquée sur lesdites faces de la lame par au moins une couche élastomère non collée sur ces faces que comprend cette structure, et en ce que la lame et/ou chaque structure porteuse comprennent en outre des moyens de rigidification transversale de ladite au moins une couche qui sont conçus pour augmenter sa raideur dans la direction transversale à la lame, de sorte à s'opposer à la rotation dudit train de roues autour d'un axe vertical.

Avantageusement, lesdits moyens de rigidification sont également conçus pour s'opposer aux déplacements transversaux du train avant et ne pas affecter la raideur longitudinale de la lame.

Selon une autre caractéristique de l'invention, lesdits moyens de rigidification peuvent comporter des moyens qui sont formés sur chaque structure porteuse et qui coopèrent en butée avec des moyens complémentaires formés sur la lame, de sorte à caler transversalement chaque structure porteuse autour de la lame.

On notera que ces moyens de rigidification permettent ainsi de différencier la raideur longitudinale (par exemple sollicitée lors du roulage sur un «nid de poule ») et la raideur transversale de la lame (notamment sollicitée en virage) en limitant le déplacement de l'ensemble du train de roues concerné lors d'un choc transversal (sans pour autant s'opposer au recul de la roue impactée qui est nécessaire au bon comportement du véhicule), grâce au raidissement de la liaison entre la lame et le châssis que procurent ces moyens de rigidification dans le sens d'une augmentation de la seule raideur transversale de cette liaison. Il en résulte que ces moyens de rigidification transversale permettent de stabilisent efficacement le véhicule en empêchant cette rotation du train de roues.

Selon une autre caractéristique de l'invention, chaque structure porteuse peut comprendre :
- un support réalisé en un matériau rigide qui est en forme de collier de serrage oblong de section transversale globalement rectangulaire et qui peut éviter ou limiter le vrillage éventuel de la lame, deux surfaces internes de ce support respectivement destinées à enserrer lesdites faces de la lame étant chacune recouvertes de ladite au moins une couche élastomère, et
- lesdites deux articulations qui sont chacune rapportées, indépendamment l'une de l'autre :
   * sur une surface externe supérieure de ce support destinée à surmonter ladite face supérieure de la lame, ou bien
   * à travers ce support, de ladite surface externe supérieure à une surface externe inférieure du support montée sous ladite face inférieure de la lame, auquel cas l'articulation traversant verticalement ce support est positionnée au-delà dudit bord longitudinal correspondant de la lame.

On notera que ladite ou chaque couche élastomère interfaciale utilisée entre chaque support et la lame permet, d'une part, de répartir de manière homogène les contraintes à la jonction entre la lame et ce support et, d'autre part, de préserver la lame de toute abrasion lorsque ce support est réalisé en un matériau plus dur que la lame.

On notera également que cette couche élastomère interfaciale, qui n'est pas collée sur la lame (ce qui permet de réduire le coût global de fabrication de la liaison au sol), peut optionnellement adhérer au support correspondant dans le cadre de la présente invention.

On notera néanmoins qu'une liaison entre chaque support et la lame composite uniquement au moyen de l'interface élastomère collée au support ne suffirait pas à garantir la sécurité du véhicule en cas de rupture de l'élastomère, et que l'utilisation de ces deux demi-supports selon l'invention reliés entre eux de sorte à enserrer la lame permet de maintenir durablement cette liaison et d'assurer ainsi de manière pérenne la sécurité du véhicule même en cas de détérioration de cette interface élastomère.

On notera en outre que la variation de la raideur de la lame composite en fonction de la charge qui lui est appliquée, qui peut être obtenue par un dimensionnement adéquat des sections de la lame, permet de limiter la variation de la fréquence de pompage du véhicule en fonction du nombre d'occupants et de leurs bagages, ce qui représente un élément de confort important qui peut être atteint sans grever le coût de fabrication de la liaison au sol selon l'invention.

D'une manière générale, on comprendra qu'une lame de ressort composite selon l'invention peut présenter des épaisseurs et des sections variables pour optimiser son fonctionnement, en particulier la fréquence de pompage, la raideur anti-roulis et la prise de flèche.

Avantageusement, ces moyens de rigidification peuvent comprendre deux rebords nervurés de raidissement qui sont formés à l'emplacement des bords transversaux respectifs de la surface externe supérieure et/ou de la surface externe inférieure de chaque support, et qui s'engagent sur des nervures transversales correspondantes de la lame.

En d'autres termes, ces rebords nervurés de chaque support (qui peuvent être indifféremment continus ou non dans la direction transversale) définissent des surfaces concaves qui s'engagent à la manière d'un encastrement avec des nervures de la lame formées soit sur une seule de ses faces, soit sur ses deux faces (ces nervures ou « contre-reliefs » convexes de la lame pouvant également être continues ou non).

Selon une autre caractéristique de l'invention, chaque support peut comporter deux demi-supports qui définissent respectivement lesdites surfaces externes supérieure et inférieure et qui sont reliés mécaniquement entre eux en au moins l'une de leurs deux paires d'extrémités latérales en regard situées au-delà desdits bords longitudinaux de la lame, par exemple par vissage, agrafage ou sertissage, ces demi-supports étant optionnellement reliés entre eux par une articulation de type charnière en l'une de leurs paires d'extrémités latérales en regard.

En d'autres termes, chaque support selon l'invention n'est pas formé d'un seul tenant, et présente une ou deux paires d'extrémités latérales à relier mécaniquement entre elles, selon le cas.

Avantageusement, chaque support peut être réalisé en un matériau métallique, ou bien en un matériau composite thermoplastique ou thermodurcissable renforcé par des fibres qui est de préférence un composite thermoplastique moulé.

Selon un exemple de réalisation de l'invention, l'une des deux articulations équipant chaque support est formée sur ladite surface externe supérieure de ce support en regard de la lame et est conçue pour recevoir un axe horizontal de liaison au châssis par exemple transversal ou longitudinal par rapport à la lame, et l'autre articulation de chaque support est formée à travers celui-ci et est conçue pour recevoir un axe vertical de liaison au châssis.

On notera d'une manière générale que les articulations équipant les supports selon l'invention peuvent être orientées non seulement selon ces trois axes principaux (i.e. horizontal transversal, horizontal longitudinal et vertical) mais encore selon toute autre direction notamment dans le plan horizontal, facilitant l'installation et le réglage cinématique du train concerné. Ces articulations peuvent être toutes deux au choix situées au dessus de chaque support ou au niveau de sa fibre neutre, qu'elles soient longitudinales ou transversales par rapport à la lame. Dans le cas d'une articulation prévue en porte-à-faux de la lame, son orientation peut également être verticale.

Selon un autre aspect de l'invention, ladite liaison au sol peut comprendre en outre deux ensembles porte roues qui sont respectivement serrés par vissage aux deux extrémités de lame, chaque ensemble porte roue pouvant comporter un élément porte rotule externe et un insert en U revêtu d'un film de caoutchouc qui assure la fixation de cet élément à la lame en enserrant l'une de ces extrémités, des vis de préférence au nombre de trois traversant en cette extrémité à la fois cet élément, cet insert et la lame.

Avantageusement, ledit élément porte rotule et ledit insert de chaque ensemble porte roue peuvent être réalisés en tôle pliée, à l'exception dudit film de caoutchouc qui est présent sur une face interne de l'insert et qui n'est pas collé sur la lame, laquelle présente une pluralité d'orifices taraudés de préférence au nombre de trois et de diamètre supérieur à celui desdites vis de sorte à éviter tout contact entre ces vis et le matériau composite de la lame.

Un procédé de fabrication selon l'invention d'une liaison au sol telle que définie ci-dessus, dans laquelle chaque structure porteuse comprend un support rigide qui forme un collier de serrage oblong de section transversale globalement rectangulaire éventuellement conçu pour éviter ou limiter le vrillage de la lame et qui comporte deux demi-supports supérieurs et inférieurs reliés mécaniquement entre eux en l'une au moins de leurs deux paires d'extrémités latérales situées au-delà desdits bords longitudinaux de la lame, comprend l'assemblage mécanique de ces demi-supports en y appliquant une pré-charge de préférence comprise entre 500 kg et 700 kg pour minimiser le risque de décollement de chaque support ainsi obtenu vis-à-vis de la lame.

De préférence, chaque support est réalisé :
- soit à partir d'un matériau métallique, de préférence par emboutissage d'une tôle ou fonte d'un matériau à base d'aluminium,
- soit à partir d'un composite thermoplastique ou thermodurcissable, par exemple en utilisant :
   * un pré-imprégné thermoplastique, tel qu'un polyamide, renforcé par des fibres continues par exemple de verre ou de carbone,
   * un moulage d'un matériau thermoplastique renforcé par des fibres non continues, ou
   * une infusion ou une injection sur des fibres continues d'un matériau thermodurcissable, par exemple en résine époxy avec des fibres par exemple de verre.

A titre encore plus préférentiel, on réalise chaque support par moulage d'un matériau composite thermoplastique renforcé par des fibres courtes ou longues non continues, et l'on peut même mouler directement sur chaque support lesdites articulations et ladite au moins une couche élastomère.

Selon une autre caractéristique de ce procédé de l'invention, l'on assemble en outre deux ensembles porte roues en disposant un insert en U revêtu d'un film de caoutchouc à l'intérieur d'un élément porte rotule, cet élément et cet insert présentant des orifices de fixation disposés mutuellement en regard, puis on serre par vissage ces deux ensembles porte roues aux extrémités respectives de la lame de manière que ledit film de caoutchouc enserre l'extrémité de lame correspondante, laquelle présente des orifices destinés à recevoir avec jeu des vis que l'on insère à travers l'élément porte rotule, l'insert et cette lame, ces vis étant de préférence au nombre de trois.

D'autres caractéristiques, avantages et détails de la présente invention ressortiront à la lecture de la description suivante de plusieurs exemples de réalisation de l'invention, donnés à titre illustratif et non limitatif, ladite description étant réalisée en référence avec les dessins joints, parmi lesquels :
la figure 1 est une vue schématique partielle en perspective d'une liaison au sol selon un exemple de l'invention montrant le montage, autour d'une lame de ressort composite, de deux structures porteuses dont les supports sont serrés et dont les articulations reçoivent des axes de support du châssis,
la figure 2 est une vue partielle en perspective montrant à plus grande échelle la structure de l'un des deux supports de la figure 1,
la figure 3 est une vue schématique partielle en perspective et en partie en section transversale d'une structure porteuse selon la figure 1, montrant notamment la couche interfaciale élastomère prévue entre le support et la lame,
la figure 4 est une vue schématique partielle de dessous et en perspective de la structure porteuse de la figure 3 montrant notamment un exemple de fixation mécanique des demi-supports de part et d'autre de la lame,
la figure 5 est une vue partielle latérale montrant un côté de la structure porteuse des figures 1 à 4 avec cet exemple de fixation des demi-supports,
la figure 6 est une vue schématique partielle en perspective d'une liaison au sol selon une variante des figures 1 à 5 montrant, pour une structure porteuse, le calage d'une autre géométrie de support autour de la lame et le montage d'autres types d'articulations,
la figure 6a est une vue schématique en perspective éclatée de la structure porteuse de la figure 6, et
la figure 7 est une vue schématique en perspective éclatée d'un ensemble porte roue destiné à être serré par vissage à une extrémité d'une lame de ressort composite selon l'invention.

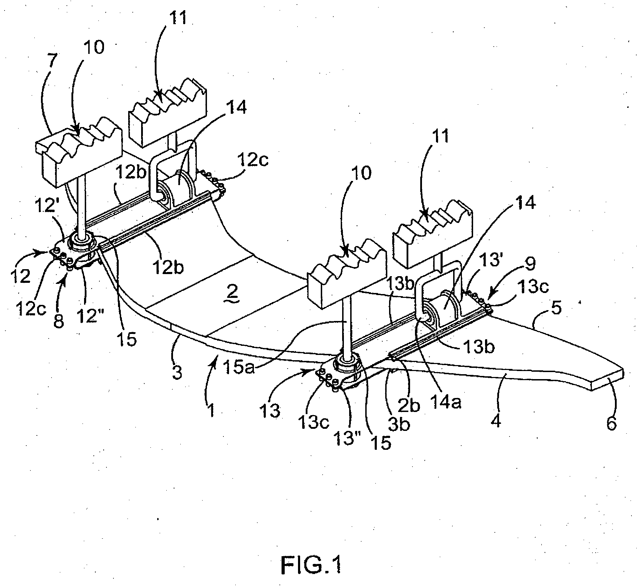

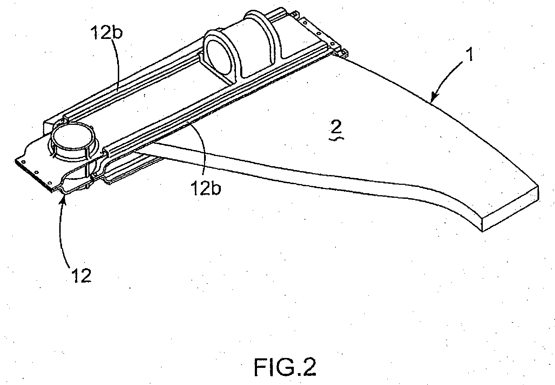

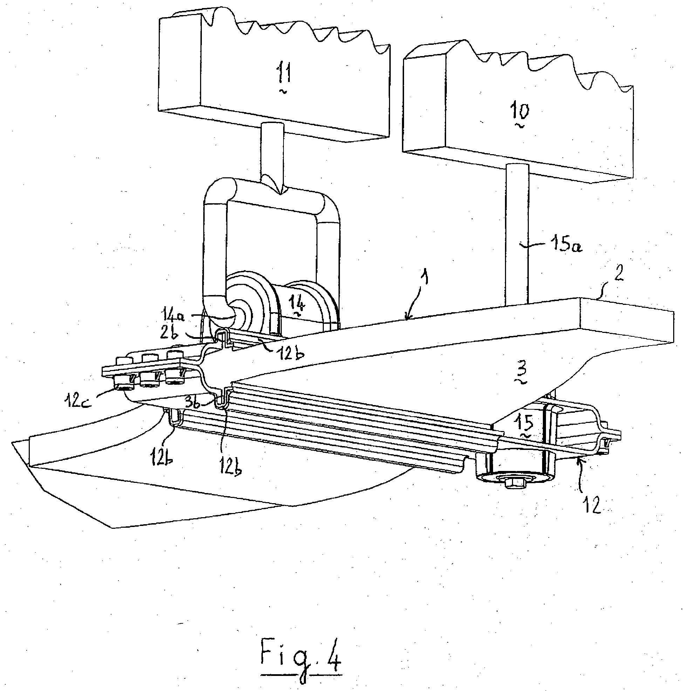

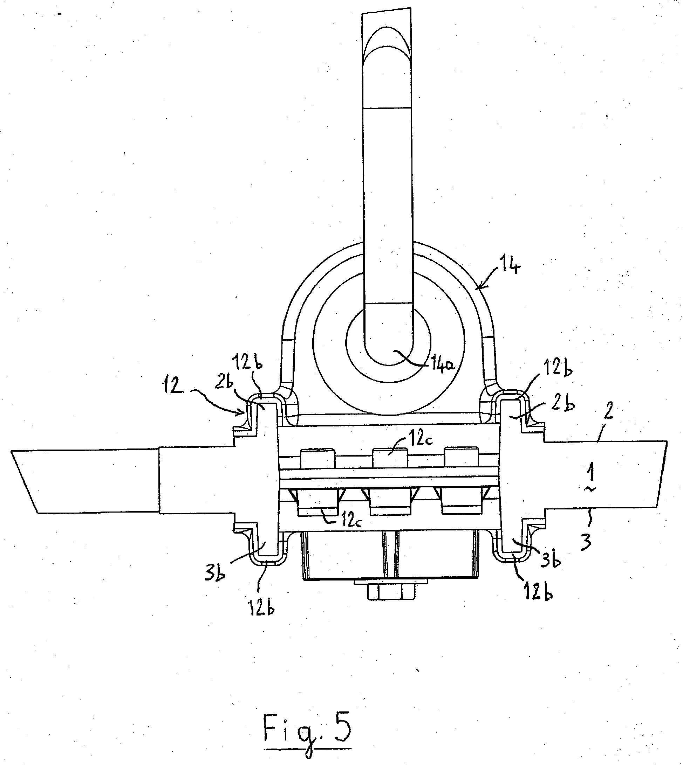

La lame de ressort 1 pour train avant ou arrière de véhicule automobile illustrée aux figures 1 à 5 est réalisée en un matériau composite thermoplastique ou thermodurcissable, avec deux faces supérieure 2 et inférieure 3 reliées entre elles par deux bords longitudinaux 4 et 5 et deux extrémités de lame 6 et 7 destinées à être fixées aux porte roues, et cette lame 1 est pourvue à proximité de ses extrémités respectives 6 et 7 de deux structures porteuses 8 et 9 de portions de la caisse ou châssis 10 et 11 du véhicule, comprenant chacune un support 12, 13 (ces portions de caisse 10 et 11 étant montrées schématiquement, étant entendu que leur forme est susceptible de varier dans une large mesure) et deux articulations élastiques 14 et 15 rapportées sur ces supports 12 et 13 à proximité des bords 4 et 5 de la lame et recevant respectivement des axes 14a et 15a.

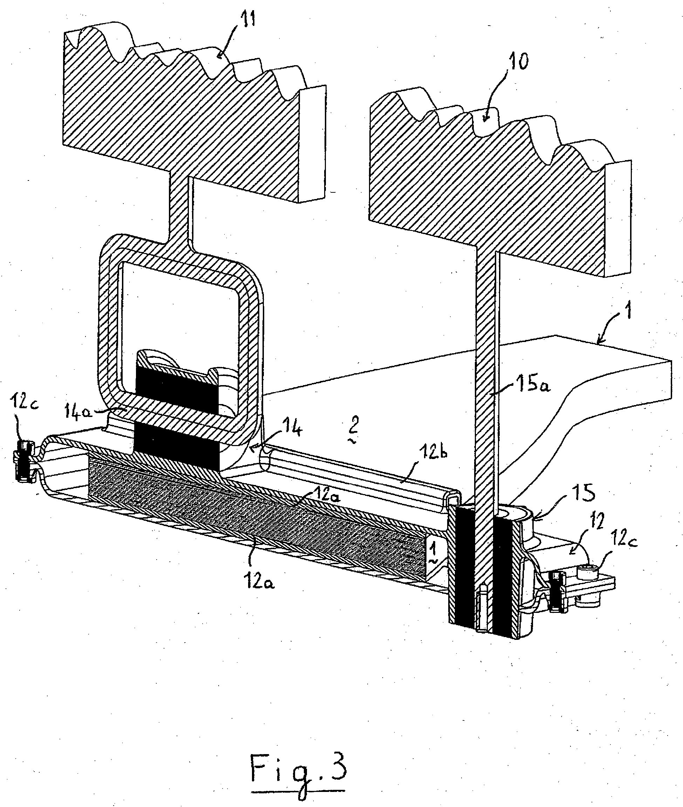

Comme notamment visible aux figures 1 et 3, chaque structure porteuse 8, 9 comprend :
- un support rigide 12, 13 qui est en forme de collier de serrage oblong de section transversale globalement rectangulaire et qui est conçu pour éviter le vrillage de la lame 1, deux surfaces internes de ce support 12, 13 respectivement destinées à enserrer les faces 2 et 3 de la lame 1 étant chacune recouvertes d'une couche élastomère interfaciale 12a (visible à la figure 3), et
- les deux articulations 14 et 15 dont l'une 14 (d'axe horizontal transversal 14a par rapport à la lame) est disposée sur la surface externe supérieure du support 12, 13 destinée à surmonter la face supérieure 2 de la lame 1, et dont l'autre 15 (d'axe vertical 15a) traverse ce support 12, 13 au-delà du bord correspondant 4 de la lame 1 de cette surface externe à une surface externe inférieure du support 12, 13 montée sous la face inférieure 3 de la lame 1.

Cette couche élastomère interfaciale 12a qui est prévue relativement épaisse, permet d'optimiser le réglage cinématique de la lame 1 (notamment en termes de recul de roue, de raideur dynamique et de raideur en rotation) et également de prévenir toute abrasion du matériau composite par un contact direct avec le métal.

Dans l'exemple de ces figures 1 à 5, deux rebords nervurés de raidissement 12b, 13b sont formés à l'emplacement des bords transversaux respectifs de la surface externe supérieure et de la surface externe inférieure de chaque support 12, 13, et ces rebords 12b, 13b viennent se caler sur des nervures transversales 2b, 3b correspondantes de la face supérieure 2 et de la face inférieure 3 de la lame 1. Comme expliqué précédemment, les reliefs concaves formés par ces rebords transversaux nervurés 12b, 13b de chaque support 12, 13 coopèrent en blocage transversal avec des contre-reliefs convexes formés par les nervures transversales 2b, 3b de la lame 1, de sorte à limiter les déplacements transversaux du train de roues et à interdire sa rotation autour d'un axe vertical.

Plus précisément et comme notamment illustré aux figures 3 à 5, chaque support 12, 13 comporte deux demi-supports respectivement supérieur 12', 13' et inférieur 12", 13" qui, dans cet exemple de réalisation, ont leurs deux paires d'extrémités latérales en regard (situées au-delà des bords 4 et 5 de la lame 1) reliées entre elles par vissage (voir les trois vis 12c, 13c de chaque côté du support 12, 13).

Chaque support 12, 13 peut être réalisé en un matériau métallique (par exemple en tôle emboutie ou par fonte d'aluminium) ce qui, par un sertissage des articulations 14 et 15, permet de garantir efficacement la sécurité de sa liaison avec la lame 1 en cas de déchirement de la couche interfaciale élastomère 12a.

En variante, notamment pour des raisons de réduction de masse, chaque support 12, 13 peut être réalisé en un matériau composite thermoplastique ou thermodurcissable renforcé par des fibres continues ou discontinues qui peut être un composite thermoplastique moulé à base de polyamide (par exemple du PA 6.6 renforcé par des fibres de verre). On peut par exemple utiliser pour chaque support 12, 13 un pré-imprégné thermoplastique (par exemple polyamide) avec des fibres de renfort continues (par exemple des fibres de verre ou de carbone), un moulage de thermoplastique renforcé par des fibres courtes, ou même un composite verre-époxy infusé ou injecté sur des fibres continues. Dans le cas de fibres continues, ces fibres sont de préférences orientées selon la direction principale du support 12, 13 (i.e. transversale par rapport à la lame 1). On notera que les moulages permettent avantageusement de réaliser des formes complexes destinées à alléger les structures tout en conservant une raideur suffisante.

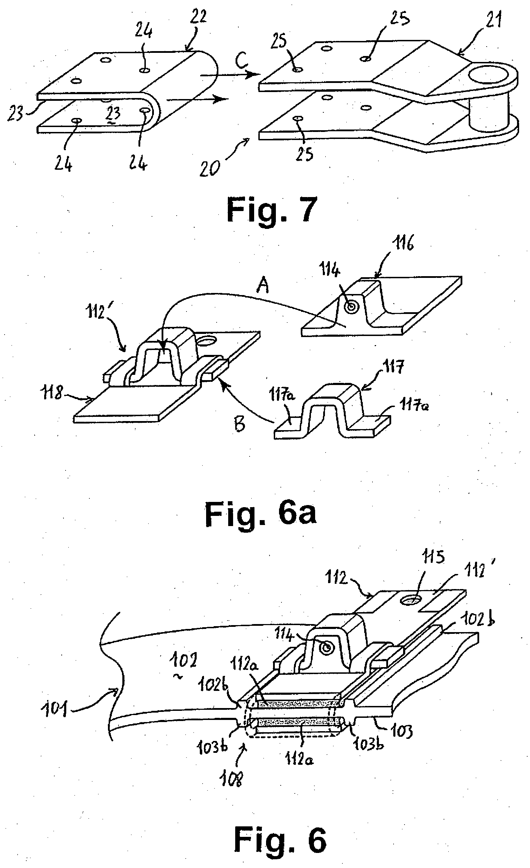

La structure porteuse 108 selon les figures 6 et 6a se différencie essentiellement des structures 8 et 9 des figures 1 à 5, en ce que c'est uniquement la lame composite 101, par ses surfaces supérieure 102 et inférieure 103, qui présente ici des nervures de rigidification 102b, 103b de la couche élastomère 112a assurant l'interface de montage serré entre le support 112 et la lame 101, et en ce que le demi-support supérieur 112' recevant les deux articulations 114 et 115 (dont l'une 114 est à axe horizontal transversal par rapport à la lame 101 et l'autre 115 à axe vertical, à l'instar des figures 1 à 5) est obtenu par insertion (voir flèche A à la figure 6a) d'un support 116 pour l'articulation 114 dans un profilé 117 de section en U renversé dont les ailes 117a sont coudées à angle droit en s'éloignant l'une de l'autre et viennent se bloquer dans une embase 118 de ce demi-support 112' (la flèche B de la figure 6a montre le blocage du profilé 117 dans l'embase 118).

L'ensemble porte roue 20 illustré à la figure 7 est serré par vissage à une extrémité 6, 7 de la lame 1, 101, et il comporte à cet effet un élément porte rotule 21 formant chape en U à l'intérieur duquel est disposé (voir flèche C) un insert 22 également en U revêtu d'un film de caoutchouc 23 destiné à enserrer cette extrémité de lame 6, 7 sans y être collé. L'élément porte rotule 21 et l'insert 22 sont par exemple réalisés en tôle pliée, et ils présentent chacun sur leurs ailes du U, tout comme l'extrémité de lame 6, 7, trois orifices 24, 25 conçus pour recevoir en regard trois vis (non illustrées) de serrage de l'élément 21 et de l'insert 22 contre la lame 1, 101, étant précisé que les trois orifices taraudés de celle-ci (qui sont percés dans une zone de la lame 1, 101 où les contraintes mécaniques sont faibles) sont de diamètre légèrement supérieur à celui des vis de sorte à éviter tout contact entre ces vis et le matériau composite de la lame 1, 101.

On peut noter que l'utilisation d'un tel ensemble porte roue 20 réalisé en tôle pliée et non collé à la lame 1, 101 permet de réduire le coût global de l'assemblage de la liaison au sol, en comparaison d'une liaison au sol à ensembles porte roues usuels qui sont collés sur la lame.

On peut également noter que ce film de caoutchouc 23 entre l'insert 22 et la lame, 1, 101 permet d'éviter l'abrasion de cette dernière par le métal de l'ensemble porte roue 20, et sert en outre de butée en cas de glissement ou de rupture des vis sans créer de degré de liberté supplémentaire.

## Revendications

1. Liaison au sol pour train de roues avant ou arrière d'un véhicule automobile, comprenant :
- une lame de ressort composite (1, 101) qui est destinée à être montée par ses deux extrémités (6 et 7) sur ce train et qui présente deux faces supérieure (2, 102) et inférieure (3, 103) définissant ensemble deux bords longitudinaux (4 et 5) reliés entre eux par lesdites extrémités, et
- deux structures porteuses (8 et 9, 108) du châssis (10 et 11) du véhicule qui sont respectivement montées sur la lame à proximité desdites deux extrémités et qui comportent chacune deux articulations élastiques (14 et 15, 114 et 115) destinées à être reliées au châssis et respectivement agencées à proximité desdits bords longitudinaux,
**caractérisée en ce que** chaque structure porteuse enserre transversalement la lame en étant appliquée sur lesdites faces de la lame par au moins une couche élastomère (12a, 112a) non collée sur ces faces que comprend cette structure, et **en ce que** la lame et/ou chaque structure porteuse comprennent en outre des moyens de rigidification transversale (2b, 3b, 12b, 13b et 102b, 103b) de ladite au moins une couche qui sont conçus pour augmenter sa raideur dans la direction transversale à la lame, de sorte à s'opposer à la rotation dudit train de roues autour d'un axe vertical.

2. Liaison au sol selon la revendication 1, **caractérisée en ce que** lesdits moyens de rigidification transversale (2b, 3b, 12b, 13b et 102b, 103b) sont également conçus pour s'opposer aux déplacements transversaux du train avant et ne pas affecter la raideur longitudinale de la lame (1, 101).

3. Liaison au sol selon la revendication 1 ou 2, **caractérisée en ce que** lesdits moyens de rigidification transversale comprennent des moyens (12b, 13b) qui sont formés sur chaque structure porteuse (8, 9) et qui coopèrent en butée avec des moyens complémentaires (2b, 3b) formés sur la lame (1), de sorte à caler transversalement chaque structure porteuse autour de la lame.

4. Liaison au sol selon une des revendications précédentes, **caractérisée en ce que** chaque structure porteuse (8, 9, 108) comprend :
- un support (12, 13, 112) réalisé en un matériau rigide qui est en forme de collier de serrage oblong de section transversale globalement rectangulaire et qui est conçu pour supporter les articulations élastiques et éventuellement pour limiter ou éviter un vrillage de la lame (1, 101), deux surfaces internes de ce support respectivement destinées à enserrer lesdites faces (2 et 3, 102 et 103) de la lame étant chacune recouvertes de ladite au moins une couche élastomère (12a, 112a), et
- lesdites deux articulations (14 et 15, 115 et 115) qui sont chacune rapportées, indépendamment l'une de l'autre :
* sur une surface externe supérieure de ce support destinée à surmonter ladite face supérieure (2, 102) de la lame, ou bien
* à travers ce support, de ladite surface externe supérieure à une surface externe inférieure du support montée sous ladite face inférieure (3, 103) de la lame, auquel cas l'articulation traversant verticalement ce support est positionnée au-delà dudit bord longitudinal (4) correspondant de la lame.

5. Liaison au sol selon les revendications 3 et 4, **caractérisée en ce que** lesdits moyens de rigidification comprennent deux rebords nervurés de raidissement (12b, 13b) qui sont formés à l'emplacement des bords transversaux respectifs de ladite surface externe supérieure et/ou de ladite surface externe inférieure de chaque support (12, 13), et qui s'engagent sur des nervures transversales correspondantes (2b, 3b) de la lame (1).

6. Liaison au sol selon la revendication 4 ou 5, **caractérisée en ce que** chaque support (12, 13, 112) comporte deux demi-supports (12' et 12", 13' et 13", 112') qui définissent respectivement lesdites surfaces externes supérieure et inférieure et qui sont reliés mécaniquement entre eux en au moins l'une de leurs deux paires d'extrémités latérales en regard (12c, 13c) situées au-delà desdits bords longitudinaux de la lame, par exemple par vissage, agrafage ou sertissage, ces demi-supports étant optionnellement reliés entre eux par une articulation de type charnière en l'une de leurs paires d'extrémités latérales en regard.

7. Liaison au sol selon la revendication 6, **caractérisée en ce que** chaque support (12, 13, 112) est réalisé en un matériau métallique, ou bien en un matériau composite thermoplastique ou thermodurcissable renforcé par des fibres qui est de préférence un composite thermoplastique moulé.

8. Liaison au sol selon une des revendications 4 à 6, **caractérisée en ce que** l'une des deux articulations (14, 114) équipant chaque support (12, 13, 112) est formée sur ladite surface externe supérieure de ce support en regard de la lame (1, 101) et est conçue pour recevoir un axe horizontal (14a) de liaison au châssis (11) par exemple transversal ou longitudinal par rapport à la lame, et **en ce que** l'autre articulation (15, 115) de chaque support (12, 13, 112) est formée à travers celui-ci et est conçue pour recevoir un axe vertical (15a) de liaison au châssis (10).

9. Liaison au sol selon une des revendications précédentes, **caractérisée en ce qu'**elle comprend en outre deux ensembles porte roues (20) qui sont respectivement serrés par vissage auxdites deux extrémités (6 et 7) de lame (1, 101), chaque ensemble porte roue comportant un élément porte rotule (21) externe et un insert (22) en U revêtu d'un film de caoutchouc (23) qui assure la fixation de cet élément à la lame en enserrant l'une de ces extrémités, des vis de préférence au nombre de trois traversant en cette extrémité à la fois cet élément, cet insert et la lame.

10. Liaison au sol selon la revendication 9, **caractérisée en ce que** ledit élément porte rotule (21) et ledit insert (22) de chaque ensemble porte roue (20) sont réalisés en tôle pliée, à l'exception dudit film de caoutchouc (23) qui est présent sur une face interne de l'insert et qui n'est pas collé sur la lame (1, 101), laquelle présente une pluralité d'orifices taraudés de préférence au nombre de trois et de diamètre supérieur à celui desdites vis de sorte à éviter tout contact entre ces vis et le matériau composite de la lame.

11. Procédé de fabrication d'une liaison au sol selon une des revendications précédentes, **caractérisé en ce que** chaque structure porteuse (8, 9, 108) comprend un support rigide (12, 13, 112) qui forme un collier de serrage oblong de section transversale globalement rectangulaire qui est éventuellement conçu pour limiter ou éviter le vrillage de la lame (1, 101) et qui comporte deux demi-supports supérieurs (12', 13', 112') et inférieurs (12", 13") reliés mécaniquement entre eux en l'une au moins de leurs deux paires d'extrémités latérales (12c, 13c) situées au-delà desdits bords longitudinaux (4 et 5) de la lame, et **en ce que** ce procédé comprend l'assemblage mécanique de ces demi-supports en y appliquant une pré-charge de préférence comprise entre 500 kg et 700 kg pour minimiser le risque de décollement de chaque support ainsi obtenu vis-à-vis de la lame.

12. Procédé selon la revendication 11, **caractérisé en ce que** chaque support (12, 13, 112) est réalisé:
- soit à partir d'un matériau métallique, de préférence par emboutissage d'une tôle ou fonte d'un matériau à base d'aluminium,
- soit à partir d'un composite thermoplastique ou thermodurcissable, par exemple en utilisant :
* un pré-imprégné thermoplastique, tel qu'un polyamide, renforcé par des fibres continues par exemple de verre ou de carbone,
* un moulage d'un matériau thermoplastique renforcé par des fibres non continues, ou
* une infusion ou une injection sur des fibres continues d'un matériau thermodurcissable, par exemple en résine époxy avec des fibres par exemple de verre.

13. Procédé selon la revendication 12, **caractérisé en ce que** l'on réalise chaque support (12, 13) par moulage d'un matériau composite thermoplastique renforcé par des fibres courtes ou longues non continues.

14. Procédé selon la revendication 13, **caractérisé en ce que** l'on moule directement sur chaque support (12, 13) lesdites articulations (14 et 15) et ladite au moins une couche élastomère (12a).

15. Procédé selon une des revendications 11 à 14, **caractérisé en ce que** l'on assemble deux ensembles porte roues (20) en disposant un insert (22) en U revêtu d'un film de caoutchouc (23) à l'intérieur d'un élément porte rotule (21), cet élément et cet insert présentant des orifices de fixation (24 et 25) disposés mutuellement en regard, puis **en ce que** l'on serre par vissage ces deux ensembles porte roues aux extrémités respectives (6 et 7) de la lame (1, 101) de manière que ledit film de caoutchouc enserre l'extrémité de lame correspondante, laquelle présente des orifices destinés à recevoir avec jeu des vis que l'on insère à travers l'élément porte rotule, l'insert et cette lame, ces vis étant de préférence au nombre de trois.

## Patentansprüche

1. Fahrwerk für vordere oder hintere Radachse eines Kraftfahrzeugs, umfassend:
- ein Verbund-Federblatt (1, 101), das zur Montage an seinen beiden Enden (6 und 7) auf diesem Fahrwerk bestimmt ist und das zwei Seiten, eine obere (2, 102) und eine untere (3, 103), aufweist, die gemeinsam zwei Längsränder (4 und 5) definieren, die anhand der Enden miteinander verbunden sind, und
- zwei tragende Strukturen (8 und 9, 108) des Fahrgestells (10 und 11) des Fahrzeugs, die jeweils auf dem Blatt in der Nähe der zwei Enden montiert sind und jeweils zwei elastische Gelenke (14 und 15, 114 und 115) aufweisen, die bestimmt sind, mit dem Fahrgestell verbunden zu sein und jeweils in der Nähe der Längsränder ausgebildet sind,
**dadurch gekennzeichnet, dass** jede tragende Struktur das Blatt transversal umschließt, indem sie auf den Seiten des Blatts anhand mindestens einer nicht auf diesen Seiten, die diese Struktur aufweist, geklebten Elastomerschicht (12a, 112a) anliegt und dass das Blatt und/oder jede tragende Struktur ferner Mittel zur transversalen Versteifung (2b, 3b, 12b, 13b und 102b, 103b) der mindestens einen Schicht umfassen, die ausgebildet sind, um ihre Steifigkeit in der transversalen Richtung zum Blatt zu erhöhen, um der Rotation der Radachse um eine vertikale Achse entgegenzuwirken.

2. Fahrwerk nach Anspruch 1, **dadurch gekennzeichnet, dass** die Mittel zur transversalen Versteifung (2b, 3b, 12b, 13b und 102b, 103b) ebenfalls ausgebildet sind, um transversalen Verlagerungen der vorderen Radachse entgegenzuwirken und um die Längssteifigkeit des Blatts (1, 101) nicht zu beeinträchtigen.

3. Fahrwerk nach Anspruch 1 oder 2, **dadurch gekennzeichnet, dass** die Mittel zur transversalen Versteifung Mittel (12b, 13b) umfassen, die auf jeder tragenden Struktur (8, 9) gebildet sind und die am Anschlag mit komplementären Mitteln (2b, 3b) zusammenwirken, die derart auf dem Blatt (1) ausgebildet sind, um jede tragende Struktur um das Blatt transversal zu verkeilen.

4. Fahrwerk nach einem der vorangehenden Ansprüche, **dadurch gekennzeichnet, dass** jede tragende Struktur (8, 9, 108) umfasst:
- eine aus einem starren Material hergestellte Unterlage (12, 13, 112) in Form eines länglichen Spannrings mit allgemein rechteckigen Querschnitt, der ausgebildet ist, um die elastischen Gelenke zu stützen und eventuell, um eine Verdrehung des Blatts (1, 101) zu begrenzen oder zu verhindern, wobei zwei interne Oberfläche dieser Unterlage, die jeweils bestimmt sind, die Seiten (2 und 3, 102 und 103) des Blatts zu umschließen, jeweils mit der mindestens einen Elastomerschicht (12a, 112a) bedeckt sind, und
- die zwei Gelenke (14 und 15, 115 und 115), die jeweils unabhängig voneinander befestigt sind:
* auf einer oberen äußeren Oberfläche dieser Unterlage, die bestimmt ist, die Oberseite (2, 102) des Blatts zu überragen, oder auch
* durch diese Unterlage von der oberen äußeren Oberfläche zu einer unteren äußeren Oberfläche der Unterlage, die unter der Unterseite (3, 103) des Blatts montiert ist, wobei in diesem Fall das Gelenk, das diese Unterlage vertikal durchquert, jenseits des entsprechenden Längsrands (4) des Blatts positioniert ist.

5. Fahrwerk nach den Ansprüchen 3 und 4, **dadurch gekennzeichnet, dass** die Versteifungsmittel zwei gerippte Versteifungskanten (12b, 13b) umfassen, die an der Stelle der jeweiligen transversalen Ränder der oberen äußeren Oberfläche und/oder der unteren äußeren Oberfläche jeder Unterlage (12, 13) ausgebildet sind und die in entsprechende transversale Rippen (2b, 3b) des Blatts (1) eingreifen.

6. Fahrwerk nach Anspruch 4 oder 5, **dadurch gekennzeichnet, dass** jede Unterlage (12, 13, 112) zwei Halb-Unterlagen (12' und 12", 13' und 13", 112') aufweist, die jeweils die obere und untere äußere Oberfläche definieren und die an mindestens einem ihrer beiden gegenüberliegenden Paare seitlicher Enden (12c, 13c), die sich jenseits der Längsränder des Blatts befinden, mechanisch verbunden sind, beispielsweise durch Schrauben, Klammern oder Bördeln, wobei diese Halb-Unterlagen anhand eines Gelenks vom Typ Scharnier an einem ihrer gegenüberliegenden Paare seitlicher Enden optional verbunden sind.

7. Fahrwerk nach Anspruch 6, **dadurch gekennzeichnet, dass** jede Unterlage (12, 13, 112) aus einem Metallmaterial hergestellt ist oder auch aus einem thermoplastischen oder duroplastischen faserverstärkten Verbundmaterial, das vorzugsweise ein geformtes thermoplastisches Verbundmaterial ist.

8. Fahrwerk nach einem der Ansprüche 4 bis 6, **dadurch gekennzeichnet, dass** eines der zwei Gelenke (14, 114), die jede Unterlage (12, 13, 112) ausstatten, auf der oberen äußeren Oberfläche dieser Unterlage gegenüber dem Blatt (1, 101) gebildet ist und ausgebildet ist, um eine zum Fahrgestell (11) horizontale Verbindungsachse (14a) beispielsweise transversal oder längs in Bezug zum Blatt aufzunehmen, und dass das andere Gelenk (15, 115) jeder Unterlage (12, 13, 112) durch diese hindurch gebildet ist und ausgebildet ist, um eine zum Fahrgestell (10) vertikale Verbindungsachse (15a) aufzunehmen.

9. Fahrwerk nach einem der vorangehenden Ansprüche, **dadurch gekennzeichnet, dass** es ferner zwei Radhaltereinheiten (20) umfasst, die jeweils an den zwei Enden (6 und 7) des Blatts (1, 101) durch Schrauben befestigt sind, wobei jede Radhaltereinheit ein äußeres Kugelgelenkhalterelement (21) und einen U-förmigen, mit einem Gummifilm (23) beschichteten Einsatz (22) aufweist, der die Befestigung dieses Elements am Blatt sichert, indem er eines dieser Enden umschließt, wobei vorzugsweise drei Schrauben an diesem Ende sowohl dieses Element als auch diesen Einsatz und das Blatt durchqueren.

10. Fahrwerk nach Anspruch 9, **dadurch gekennzeichnet, dass** das Kugelgelenkhalterelement (21) und der Einsatz (22) jeder Radhaltereinheit (20) mit Ausnahme des Gummifilms (23), der auf einer Innenseite des Einsatzes vorhanden ist und der nicht auf dem Blatt (1, 101) verklebt ist, aus gefaltetem Blech hergestellt sind, das eine Vielzahl und vorzugsweise drei gewindete Öffnungen mit einem größeren Durchmesser als der der Schrauben aufweist, um jeden Kontakt zwischen diesen Schrauben und dem Verbundmaterial des Blatts zu vermeiden.

11. Herstellungsverfahren eines Fahrwerks nach einem der vorangehenden Ansprüche, **dadurch gekennzeichnet, dass** jede tragende Struktur (8, 9, 108) eine starre Unterlage (12, 13, 112) umfasst, die einen länglichen Spannring mit allgemein rechteckigen Querschnitt bildet, der eventuell ausgebildet ist, um die Verdrehung des Blatts (1, 101) zu begrenzen oder zu verhindern und der zwei obere (12', 13', 112') und untere (12", 13") Halb-Unterlagen aufweist, die an mindestens einem ihrer beiden Paare seitlicher Enden (12c, 13c), die sich jenseits der Längsränder (4 und 5) des Blatts befinden, mechanisch miteinander verbunden sind, und dass dieses Verfahren die mechanische Verbindung dieser Halb-Unterlagen durch dortige Anwendung einer Vorbelastung vorzugsweise zwischen 500 kg und 700 kg inklusive umfasst, um die Gefahr eines Lösens jeder derart gegenüber dem Blatt erhaltenen Unterlage zu minimieren.

12. Verfahren nach Anspruch 11, **dadurch gekennzeichnet, dass** jede Unterlage (12, 13, 112) hergestellt ist:
- entweder aus einem Metallmaterial, vorzugsweise durch Tiefziehen eines Blechs oder Schmelzen eines Materials auf der Basis von Aluminium,
- oder aus einem thermoplastischen oder duroplastischen Verbundmaterial, beispielsweise unter Verwendung:
* eines thermoplastischen vorimprägnierten Halbzeugs wie ein Polyamid, das mit durchgängigen Fasern beispielsweise aus Glas oder Karbon verstärkt ist,
* einer Formung eines thermoplastischen Materials, das mit nicht durchgängigen Fasern verstärkt ist, oder
* einer Infusion oder Injektion auf durchgängige Fasern eines duroplastischen Materials beispielsweise aus Epoxidharz mit beispielsweise Glasfasern.

13. Verfahren nach Anspruch 12, **dadurch gekennzeichnet, dass** jede Unterlage (12, 13) durch Formen eines mit nicht durchgängigen kurzen oder langen Fasern verstärkten thermoplastischen Verbundmaterials hergestellt ist.

14. Verfahren nach Anspruch 13, **dadurch gekennzeichnet, dass** die Gelenke (14 und 15) und die mindestens eine Elastomerschicht (12a) direkt auf jede Unterlage (12, 13) aufgeformt werden.

15. Verfahren nach einem der Ansprüche 11 bis 14, **dadurch gekennzeichnet, dass** zwei Radhaltereinheiten (20) verbunden werden, indem ein mit einem Gummifilm (23) beschichteter U-förmiger Einsatz (22) im Innern eines Kugelgelenkhalterelements (21) angeordnet wird, wobei dieses Element und dieser Einsatz Befestigungsöffnungen (24 und 25) aufweisen, die jeweils gegenüber angeordnet sind, und dass man dann diese beiden Radhaltereinheiten an den jeweiligen Enden (6 und 7) des Blatts (1, 101) durch Verschrauben derart verspannt, dass der Gummifilm das entsprechende Blattende umschließt, welches Öffnungen aufweist, die zur Aufnahme von Schrauben mit Spiel bestimmt sind, die durch das Kugelgelenkhalterelement, den Einsatz und dieses Blatt eingesetzt werden, wobei es vorzugsweise drei Schrauben sind.

## Claims

1. A ground contact system for a front or rear wheel set of a motor vehicle, comprising:
- a composite leaf spring (1, 101) which is intended to be mounted on this wheel set by its two extremities (6 and 7) and which has two upper (2, 102) and lower (3, 103) surfaces together forming two longitudinal edges (4 and 5) connected together by said extremities, and
- two bearer structures (8 and 9, 108) of the vehicle chassis (10 and 11) which are respectively mounted on the leaf close to said two extremities and which each comprise two resilient articulations (14 and 15, 114 and 115) intended to be connected to the chassis and located respectively close to said longitudinal edges,
**characterized in that** each bearer structure transversely and tightly surrounds the leaf by being applied to said surfaces of the leaf by at least one elastomeric layer (12a, 112a) not bonded to these surfaces that this structure comprises, and **in that** the leaf and/or each bearer structure further comprise transverse stiffening means (2b, 3b, 12b, 13b and 102b, 103b) for said at least one layer which are designed to increase its stiffness in the direction transverse to the leaf so as to oppose rotation of said wheel set about a vertical axis.

2. The ground contact system as claimed in claim 1, **characterized in that** said transverse stiffening means (2b, 3b, 12b, 13b and 102b, 103b) are also designed to oppose transverse movements of the front wheel set and not affect the longitudinal stiffness of the leaf (1, 101).

3. The ground contact system as claimed in claim 1 or 2, **characterized in that** said transverse stiffening means comprise means (12b, 13b) which are formed on each bearer structure (8, 9) and act together in an abutting manner with complementary means (2b, 3b) formed on the leaf (1) to transversely lock each bearer structure about the leaf.

4. The ground contact system as claimed in one of the preceding claims, **characterized in that** each bearer structure (8, 9, 108) comprises:
- a support (12, 13, 112) made of rigid material in the form of an oblong tightening collar of substantially rectangular transverse cross section which is designed to support the resilient articulations and optionally limit or prevent twisting of the leaf (1, 101), two internal surfaces of this support intended respectively to clamp upon said surfaces (2 and 3, 102 and 103) of the leaf being each covered with said at least one elastomeric layer (12a, 112a), and
- said two articulations (14 and 15, 115 and 115) which are each attached independently of each other:
* to an upper external surface of this support intended to be above said upper surface (2, 102) of the leaf, or
* through this support, from said upper external surface to a lower external surface of the support mounted beneath said lower surface (3, 103) of the leaf, in which case the articulation passing vertically through the support is positioned beyond said corresponding longitudinal edge (4) of the leaf.

5. The ground contact system as claimed in claims 3 and 4, **characterized in that** said stiffening means comprise two stiffening rib edges (12b, 13b) which are formed at the locations of respective transverse edges of said upper external surface and/or said lower external surface of each support (12, 13) and which engage on corresponding transverse ribs (2b, 3b) of the leaf (1).

6. The ground contact system as claimed in claim 4 or 5, **characterized in that** each support (12, 13, 112) comprises two half-supports (12' and 12", 13' and 13", 112') which respectively define said upper and lower external surfaces and which are mechanically connected together at at least one of their two pairs of opposite lateral extremities (12c, 13c) located beyond said longitudinal edges of the leaf, for example by bolting, stapling or crimping, these half-supports being optionally connected together by an articulation of the hinge type in one of their pairs of opposite lateral extremities.

7. The ground contact system as claimed in claim 6, **characterized in that** each support (12, 13, 112) is made of a metal material, or of a thermoplastic or thermosetting composite material reinforced by fibers which is preferably a molded thermoplastic composite.

8. The ground contact system as claimed in one of claims 4 to 6, **characterized in that** one of the two articulations (14, 114) equipping each support (12, 13, 112) is formed on said upper external surface of that support opposite the leaf (1, 101) and is intended to receive a horizontal connecting axis (14a) to the chassis (11) which is for example transverse or longitudinal with respect to the leaf, and **in that** the other articulation (15, 115) of each support (12, 13, 112) is formed across this support and is intended to receive a linking vertical axis (15a) to the chassis (10).

9. The ground contact system as claimed in one of the preceding claims, **characterized in that** it further comprises two wheel supporting assemblies (20) which are respectively secured by bolting to said two extremities (6 and 7) of the leaf (1, 101), each wheel-supporting assembly comprising an external swivel support member (21) and a U-shaped insert (22) coated with a film of rubber (23) which attaches this member to the leaf by clamping onto one of these extremities, bolts preferably three in number passing at this extremity through this member, this insert and the leaf at the same time.

10. The ground contact system as claimed in claim 9, **characterized in that** said swivel supporting member (21) and said insert (22) for each wheel supporting assembly (20) are made of folded sheet metal, with the exception of said rubber film (23) which is present on an internal surface of the insert and which is not adhesively bonded to the leaf (1, 101), which leaf has a plurality of threaded openings preferably three in number and of diameter greater than that of said bolts to prevent any contact between these bolts and the composite material of the leaf.

11. A process for the manufacture of a ground contact system according to any one of the preceding claims, **characterized in that** each bearer structure (8, 9, 108) comprises a rigid support (12, 13, 112) which forms an oblong tightening collar of substantially rectangular transverse cross section which is optionally intended to limit or prevent twisting of the leaf (1, 101) and which comprises two upper (12', 13', 112') and lower (12", 13") half-supports mechanically connected together at at least one of their two pairs of lateral extremities (12c, 13c) located beyond said longitudinal edges (4 and 5) of the leaf, and **in that** this process comprises mechanical assembly of these half-supports by applying thereto a pre-loading of preferably between 500 kg and 700 kg to minimize the risk of detachment of each support so obtained from the leaf.

12. The process as claimed in claim 11, **characterized in that** each support (12, 13, 112) is made of:
- either a metal material, preferably by swaging sheet metal, or by casting an aluminum-based material, or
- from a thermoplastic or thermosetting composite, for example by using:
* a thermoplastic pre-preg such as a polyamide reinforced with continuous fibers, of for example glass or carbon,
* a molding of a thermoplastic material reinforced by non-continuous fibers, or
* an infusion or an injection onto continuous fibers of a thermosetting material, for example epoxy resin with fibers of for example glass.

13. The process as claimed in claim 12, **characterized in that** each support (12, 13) is made by molding a thermoplastic composite material reinforced by non-continuous short or long fibers.

14. The process as claimed in claim 13, **characterized in that** said articulations (14 and 15) and said at least one elastomer layer (12a) are molded directly onto each support (12,13).

15. The process as claimed in one of claims 11 to 14, **characterized in that** two wheel supporting assemblies (20) are assembled by placing a U-shaped insert (22) coated with a rubber film (23) within a swivel supporting member (21), this member and this insert having attachment openings (24 and 25) mutually opposite each other, and **in that** these two wheel-supporting assemblies are bolted to the respective extremities (6 and 7) of the leaf (1, 101) in such a way that said rubber film clamps upon the corresponding extremity of the leaf, which leaf has openings intended to loosely receive bolts inserted through the swivel supporting member, the insert and this leaf, these bolts being preferably three in number.
